# EUROPEAN PATENT APPLICATION

(11) **EP 0 834 684 A1**
(43) Date of publication of application: **08.04.1998**
(21) Application number: 97117149.1
(22) Date of filing: 02.10.1997
(51) Int. Cl.: F16H 61/36

(54) **Vehicle transmission control device and relative assembly method**

(30) Priority: 04.10.1996 IT TO960808
(71) Applicant: ROLTRA MORSE S.p.A., 86077 Pozzilli (IT)
(72) Inventor: Ottino, Franco Giovanni, 56017 San Giuliano Terme (IT)
(74) Representative: Franzolin, Luigi

(57) **Abstract**

A control device (1) for a vehicle transmission, having a box-shaped supporting element (2) fittable to a vehicle body element (3); an intermediate element (5) rotating with respect to the supporting element (2) about a first axis (A) of rotation; a gear lever (6) fitted to the intermediate element (5) and rotating with respect to the intermediate element about a second axis (B) perpendicular to the first axis (A); a relay lever (55) rotating about a third axis (E) distinct from the first and second axes (A, B); and transmission means (49) interposed between the gear lever (6) and the relay lever (55) to rotate the relay lever (55) about the third axis (E) in response to rotation of the gear lever (6) and the intermediate element (5) about the first axis (A); at least the intermediate element (5), the gear lever (6), the relay lever (55) and the transmission means (49) defining a preassembled unit (80) insertable inside the supporting element (2) through an opening (20) and in an insertion direction (F) and connectable to the supporting element (2) through connecting means (25, 32, 56) fittable in assembly directions crosswise to the insertion direction (F).

## Description

The present invention relates to a vehicle transmission control device or, more simply, to a shift control device, and to a method of assembling such a device.

Shift control devices are known, which substantially comprise a box-shaped supporting element fitted to a vehicle body element; an intermediate element rotating with respect to the supporting element about a first axis of rotation; a gear lever fitted to the intermediate element and rotating with respect to the intermediate element about a second axis perpendicular to first to control displacement of a first remote control member; and a relay lever rotating about a third axis distinct from the first and second axes to convert rotation of the gear lever and the intermediate element about the first axis into displacement of a second remote control member.

Devices of the type briefly described above are assembled by placing the supporting element on an assembly line, and fitting the supporting element with the various internal members of the devices, such as the gear lever, intermediate element, relay lever, remote control members, and necessary connecting and transmission means. More specifically, as the internal members are inserted inside the supporting element from various sides and in various directions, the supporting element must be manipulated and oriented by the fitter according to the type of internal member being assembled, thus resulting in a relatively time-consuming, complex, high-cost assembly cycle.

It is an object of the present invention to provide a vehicle transmission control device designed to eliminate the aforementioned drawbacks typically associated with known devices.

According to the present invention, there is provided a control device for a vehicle transmission, comprising:
- a box-shaped supporting element fittable to a vehicle body;
- an intermediate element;
- first hinge connecting means for connecting said intermediate element to said supporting element, and defining a first axis of rotation of said intermediate element with respect to the supporting element;
- a gear lever fitted to said intermediate element and rotating with respect to the intermediate element about a second axis perpendicular to said first axis;
- a relay lever;
- second hinge connecting means for connecting said relay lever to said supporting element about a third axis distinct from said first and second axes; and
- transmission means interposed between said gear lever and said relay lever to rotate said relay lever about said third axis in response to rotation of said gear lever and said intermediate element about said first axis;
   characterized in that at least said intermediate element, said gear lever, said relay lever and said transmission means define a preassembled unit connectable to said supporting element by said first and second hinge connecting means; said supporting element comprising at least a first opening large enough to permit insertion of said preassembled unit inside the supporting element in an insertion direction; and said first and second hinge connecting means being fittable to said supporting element in assembly directions crosswise to said insertion direction.

The present invention also relates to a method of assembling a control device for a vehicle transmission.

According to the present invention, there is provided a method of assembling a control device for a vehicle transmission, said device comprising:
- a box-shaped supporting element fittable to a vehicle body;
- an intermediate element;
- first hinge connecting means for connecting said intermediate element to said supporting element, and defining a first axis of rotation of said intermediate element with respect to the supporting element;
- a gear lever fitted to said intermediate element and rotating with respect to the intermediate element about a second axis perpendicular to said first axis;
- a relay lever;
- second hinge connecting means for connecting said relay lever to said supporting element about a third axis distinct from said first and second axes; and
- transmission means interposed between said gear lever and said relay lever to rotate said relay lever about said third axis in response to rotation of said gear lever and said intermediate element about said first axis;
   said method being characterized by comprising the steps of:
   - forming a preassembled unit by assembling to one another at least said intermediate element, said gear lever, said relay lever and said transmission means;
   - placing said supporting element in a fixed assembly position;
   - inserting said preassembled unit inside said supporting element through an opening in the supporting element and in an insertion direction;
   - fitting said first and second hinge connecting means to said supporting element in assembly directions crosswise to said insertion direction.

A preferred, non-limiting embodiment of the present invention will be described by way of example with reference to the accompanying drawings, in which:
Figure 1 shows a partially sectioned side view, with parts removed for clarity, of a control device for a vehicle transmission in accordance with the present invention;
Figure 2 shows a partially sectioned front view of the Figure 1 device;
Figure 3 shows a larger-scale, partially sectioned top plan view, with parts removed for clarity, of the Figure 1 device;
Figure 4 shows a larger-scale front view of a detail of the Figure 1 device in a preassembly position.

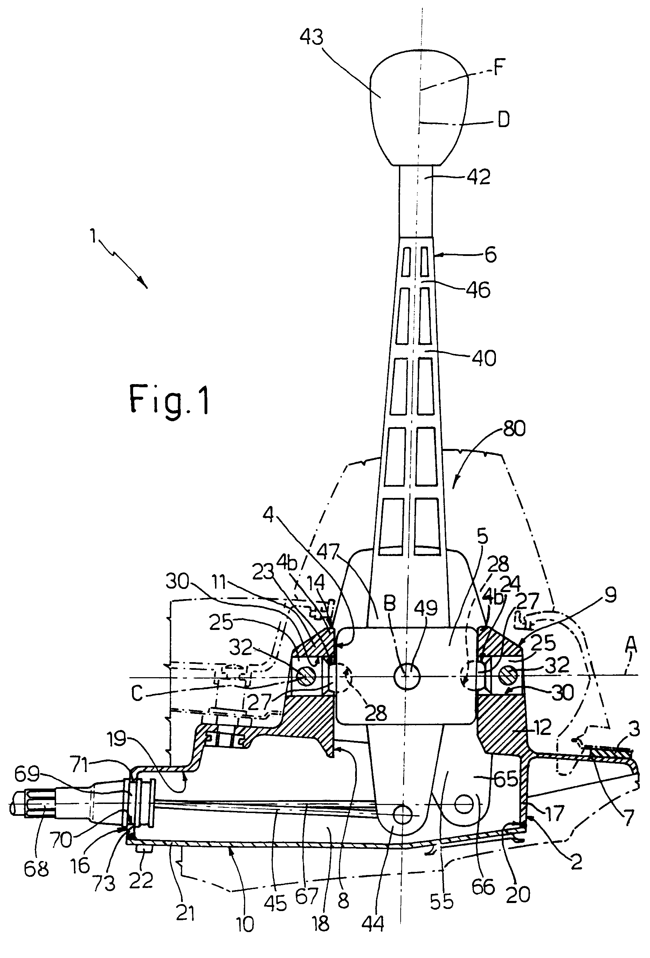

Number 1 in Figures 1, 2 and 3 indicates a control device for a vehicle transmission (not shown).

Device 1 substantially comprises a fixed, substantially box-shaped supporting element 2 connectable rigidly to a vehicle body element 3 and having a substantially rectangular top opening 4; an intermediate element 5 housed inside element 2 at opening 4 and rotating with respect to element 2 about a first axis A; and a gear lever 6 extending loosely through opening 4, fitted to element 5, and rotating with respect to element 5 about a second axis B perpendicular to axis A.

Lever 6 therefore rotates with respect to fixed element 2 about axis A (fixed) and about axis B (movable with element 5); axis A is substantially longitudinal with respect to the vehicle, and lever 6 rotates about axis A to select the gears; axis B is crosswise to the vehicle, and lever 6 rotates about axis B to engage or disengage the gears; and operation of lever 6 is transmitted to the transmission via relay means described later on.

Element 2 comprises a flange 7 for fitment to body element 3 and having, at an end portion, a substantially rectangular through opening 8; a substantially tubular top body 9 extending upwards from the edges of opening 8; and a bottom body 10 extending downwards from flange 7 and elongated in the direction of axis A.

Body 9 comprises a front and a rear wall 11, 12 crosswise to axis A; two lateral walls 13a, 13b substantially parallel to axis A and crosswise to axis B; and a top wall 14 substantially in the form of a rectangular frame and defining opening 4. More specifically, opening 4 is defined by two edges 4a longitudinal with respect to the vehicle, and by two edges 4b crosswise with respect to the vehicle; and walls 11, 12, 13a, 13b and 14 define a first cavity 15 communicating externally at the top through opening 4.

Body 10 comprises a front wall 16 and rear wall 17 crosswise to axis A, and two lateral walls 18 substantially parallel to axis A and crosswise to axis B; and walls 16, 17 and 18 define a second cavity 19 communicating with cavity 15 through opening 8 and externally through a bottom opening 20 large enough to permit assembly of the internal members of device 1, as explained in detail later on. Body 10 also comprises a cover 21 for closing opening 20, and which is positioned facing flange 7 and fitted to the edges of opening 20 by means of a number of screws 22.

Element 5 is substantially cylindrical, of axis A, is housed inside cavity 15 between walls 11 and 12, and is connected to wall 11 by a first hinge 23 and to wall 12 by a second hinge 24, both of axis A.

Each hinge 23, 24 comprises a pin 25, of axis A, connected releasably to respective wall 11, 12 by releasable fastening means, and having a substantially hemispherical head 27 facing element 5; and a substantially hemispherical seat 28 formed in the lateral wall of element 5 and engaged by head 27 of pin 25.

More specifically, according to a preferred embodiment, each wall 11, 12 comprises a central through hole 30, of axis A, defining a seat for respective pin 25; and a dead hole 31 having an axis C perpendicular to axis A and to walls 13a, 13b, and intersecting hole 30. For each hinge 23, 24, said releasable fastening means comprise a cylindrical pin 32, of axis C, driven inside respective hole 31, and in turn comprising an intermediate portion engaging a hole 34 formed in respective pin 25, and opposite axial end portions engaging hole 31 interferentially to connect pin 25 rigidly to respective wall 11, 12.

Each wall 11, 12 also comprises a pair of recesses 37 formed on opposite sides of respective hole 30 to permit removal of respective pin 32 from element 2.

Lever 6 comprises a rod 40, which has an axis D perpendicular to axes A and B, is fitted through a through opening 41, of axis D, formed in element 5, and has a top end 42 fitted integrally with a knob 43, and a substantially fork-shaped bottom end 44 housed inside cavity 19 and hinged to one end of a gear engagement/disengagement control cable 45.

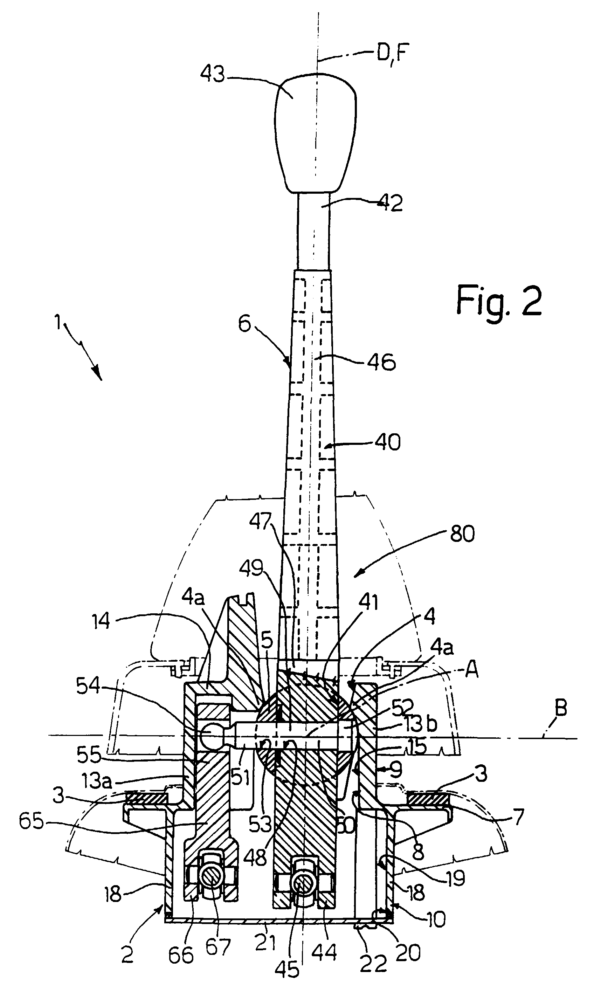

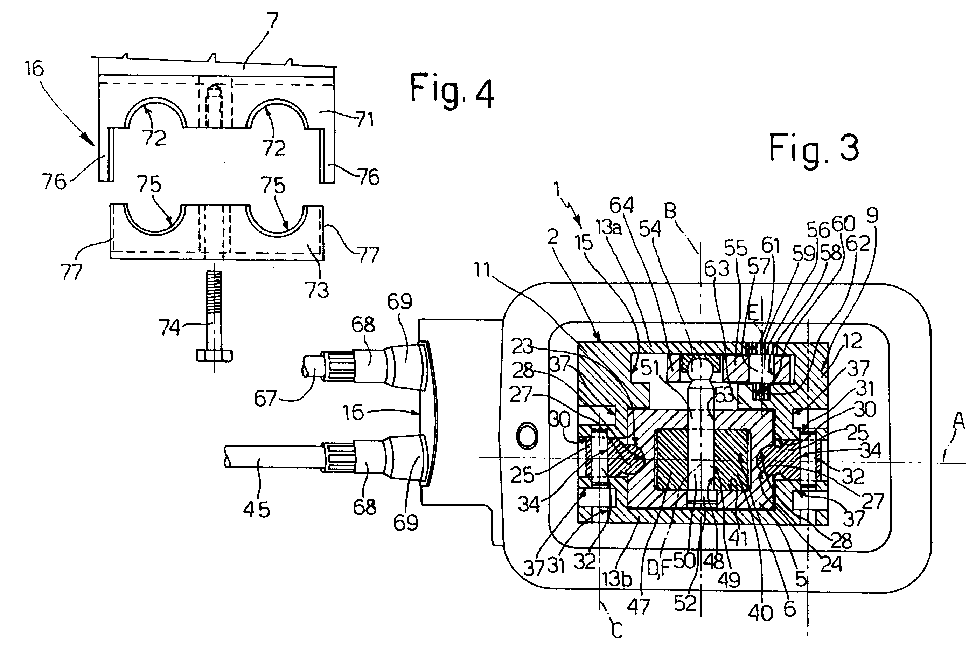

Rod 40 also comprises a top portion 46 tapering towards knob 43; and a bottom portion 47 housed in sliding manner and with a small amount of lateral clearance inside opening 41, and having a through hole 48, of axis B, defining a seat for a pin 49 permitting rotation with respect to element 5 (Figures 2 and 3).

Pin 49 comprises an intermediate portion 50 engaging hole 48 of lever 6 interferentially so as to be connected rigidly to lever 6; and opposite axial end portions 51, 52 engaging in radially slack manner a hole 53, of axis B, formed in element 5 and intersecting opening 41.

One (51) of the axial end portions of pin 49 extends axially outwards of element 5 to form a spherical end head 54, which acts as an articulating element for controlling a relay lever 55.

With reference, in particular, to Figures 2 and 3, lever 55 is substantially in the form of a quadrant, and is hinged to one (13a) of the lateral walls of body 9 by a hinge pin 56, which has an axis E perpendicular to axis A, and is positioned crosswise to the vehicle and interposed between head 54 of pin 49 and wall 12. More specifically, pin 56 comprises an intermediate portion 57 engaging in sliding manner a hole 58, of axis E, formed in the body of lever 55; and knurled opposite axial end portions 59, 60, respectively larger and smaller in diameter than portion 57, and interferentially engaging respective holes 61, 62, of axis E, formed respectively in wall 13a and in an appendix 63 substantially parallel to wall 13a and projecting from wall 12 towards pin 49.

Lever 55 comprises a first arm 64 extending substantially longitudinally with respect to the vehicle, and connected to head 54 of pin 49; and a second arm 65 extending substantially downwards, and having a substantially fork-shaped bottom end 66 hinged to one end of a gear selection control cable 67.

Cables 45, 67, both Bowden cables, comprise respective substantially cylindrical sheaths 68 (Figure 1), each of which has an end portion 69 locked inside a respective through seat 70 formed in wall 16 of body 10, and is oriented substantially parallel to axis A.

More specifically, and as shown in Figure 4, wall 16 comprises a top portion 71 and a bottom portion 73, which cooperate transversely and on opposite sides with sheaths 68, are connected releasably to each other, and define seats 70. More specifically, portion 71 is integral with flange 7, and comprises, at the free end, a pair of semicircular recesses 72; and portion 73 is connected releasably to portion 71 by a screw 74, and also comprises a pair of semicircular recesses 75 facing respective recesses 72 of portion 71, and defining, with recesses 72, seats 70 for housing sheaths 68. Portion 71 also comprises a pair of lateral arms 76 projecting downwards from portion 71, and defining respective slideways for respective lateral edges 77 of portion 73 when connecting portions 71 and 73.

Device 1 is assembled as follows. First, lever 6 is connected to element 5 by inserting portion 47 of lever 6 inside opening 41, and fitting pin 49 inside hole 48 of lever 6 and hole 52 of element 5; head 54 of pin 49 is then connected to lever 55; and cables 45 and 67, inserted inside respective sheaths 68, are hinged respectively to end 44 of rod 40 and to end 66 of arm 65 of lever 55. The above members, when assembled to one another, define a preassembled unit 80. Element 2, without cover 21 and portion 73 of wall 16, is placed on an assembly fixture (not shown) in a fixed position with opening 20 facing the fitter; and pins 32 are inserted inside holes 31 in a preassembly axial position permitting insertion of pins 25 inside respective holes 30.

At this point, unit 80 is inserted through opening 20 into element 2 in an insertion direction F perpendicular to axis A and longitudinal with respect to lever 6. For this purpose, as already stated, opening 20 is large enough to permit insertion of said members forming part of unit 80 into element 2, which terminates when the lateral surface of element 5 contacts longitudinal edges 4a of opening 4, and sheaths 68 of cables 45, 67 engage respective recesses 72 in portion 71 of wall 16.

Pins 25 are then inserted inside respective holes 30 in respective assembly directions parallel to axis A and perpendicular to direction F, so that heads 27 engage respective seats 28 in element 5, and holes 34 in pins 25 are coaxial with respective holes 31 in respective walls 11, 12. Pins 32 are then pushed axially inside holes 34 in pins 25 to fix pins 25 to respective walls 11, 12; and, similarly, pin 56 is inserted inside holes 58, 61, 62 in an assembly direction parallel to axis E and perpendicular to direction F.

Finally, portion 73 of wall 16 is slid between arms 76 of portion 71 into a final position in which recesses 75 of portion 73 contact the lateral surfaces of respective sheaths 68; portions 71 and 73 are connected to each other by means of screw 74; and cover 21 is fitted to the edges of opening 20 to close the opening.

Device 1 operates as follows.

To select a gear, knob 43 of gear lever 6 is moved laterally to rotate lever 6, pin 49 integral with lever 6, and hence element 5 about axis A. When pin 49 is rotated about transverse axis A, spherical head 54 is moved up or down along an arc, and transmits motion to lever 55, which rotates about axis E to activate gear selection control cable 67.

On reaching the selected position, the corresponding gear is engaged by moving lever 6 backwards or forwards, so as to rotate lever 6 about axis B and activate engagement control cable 45.

The advantages of the shift device according to the present invention will be clear from the foregoing description.

In particular, assembly of device 1 is simplified enormously by the supporting element being set up on the assembly fixture in a fixed position, and by the fitter simply inserting unit 80 inside element 2 through opening 20 in insertion direction F, and inserting the pins laterally with respect to element 2 in respective assembly directions perpendicular to direction F, thus eliminating any maneuvering of supporting element 2, and so reducing assembly time and cost.

Clearly, changes may be made to device 1 as described and illustrated herein without, however, departing from the scope of the accompanying Claims.

In particular, pins 25 may comprise snap-on connecting means for insertion inside respective holes 30, thus further simplifying assembly of device 1 by eliminating pins 32.

## Claims

1. A control device (1) for a vehicle transmission, comprising:
- a box-shaped supporting element (2) fittable to a vehicle body (3);
- an intermediate element (5);
- first hinge connecting means (25, 32) for connecting said intermediate element (5) to said supporting element (2), and defining a first axis (A) of rotation of said intermediate element (5) with respect to the supporting element (2);
- a gear lever (6) fitted to said intermediate element (5) and rotating with respect to the intermediate element (5) about a second axis (B) perpendicular to said first axis (A);
- a relay lever (55);
- second hinge connecting means (56) for connecting said relay lever (55) to said supporting element (2) about a third axis (E) distinct from said first and second axes (A, B); and
- transmission means (49) interposed between said gear lever (6) and said relay lever (55) to rotate said relay lever (55) about said third axis (E) in response to rotation of said gear lever (6) and said intermediate element (5) about said first axis (A);
characterized in that at least said intermediate element (5), said gear lever (6), said relay lever (55) and said transmission means (49) define a preassembled unit (80) connectable to said supporting element (2) by said first and second hinge connecting means (25, 32, 56); said supporting element (2) comprising at least a first opening (20) large enough to permit insertion of said preassembled unit (80) inside the supporting element (2) in an insertion direction (F); and said first and second hinge connecting means (25, 32, 56) being fittable to said supporting element (2) in assembly directions crosswise to said insertion direction (F).

2. A device as claimed in Claim 1, characterized in that said insertion direction (F) is crosswise to said first, second and third axes (A, B, E).

3. A device as claimed in Claim 1 or 2, and comprising a first remote control member (45) connected to said gear lever (6) and for transmitting motion to said transmission in response to rotation of said gear lever (6) about said second axis (B); and a second remote control member (67) connected to said relay lever (55) and for transmitting motion to said transmission in response to rotation of said gear lever (6) and said intermediate element (5) about said first axis (A); characterized in that said preassembled unit (80) comprises said first and second remote control members (45, 67).

4. A device as claimed in Claim 3, characterized in that said first and second remote control members (45, 67) are engaged inside respective first seats (70) formed through a first wall (16) of said supporting element (2); said first wall (16) comprising a fixed first portion (71) and a movable second portion (73), which cooperate transversely and on opposite sides with said remote control members (45, 67), are connected to each other releasably, and define said first seats (70).

5. A device as claimed in Claim 4, characterized in that said first and second remote control members respectively comprise a first and a second control cable (45, 67) having respective sheaths (68) locked inside said first seats (70); said first and second portions (71, 73) of said first wall (16) comprising respective pairs of semicircular first and second recesses (72, 75) facing each other; each said first recess (72) and a corresponding said second recess (75) defining a respective circular said first seat (70).

6. A device as claimed in any one of the foregoing Claims, characterized in that said first hinge connecting means (25, 32) comprise a pair of first engaging elements (25) coaxial with said first axis (A), fitted to said supporting element (2), located on opposite sides of said intermediate element (5), and which are connected to respective second engaging elements (28) on the intermediate element (5) to form respective hinges (23, 24) coaxial with said first axis (A); said first engaging elements (25) being connectable releasably to said supporting element (2) in a respective said assembly direction parallel to said first axis (A).

7. A device as claimed in Claim 6, characterized in that each said first engaging element is a first pin (25) having a hemispherical end head (27); and each said second engaging element is a substantially hemispherical second seat (28) formed in said intermediate element (5) and engaged by a respective said end head (27) to form a respective said hinge (23, 24).

8. A device as claimed in Claim 6 or 7, characterized in that said first hinge connecting means (25, 32) comprise releasable fastening means (32) for releasably fastening said first engaging elements (25) to said supporting element (2).

9. A device as claimed in Claim 8, characterized in that said supporting element (2) comprises a second and a third wall (11, 12) crosswise to said first axis (A) and located on opposite sides of said intermediate element (5); said second and third walls (11, 12) each comprising a through first hole (30) coaxial with said first axis (A) and engaged by a respective said first engaging element (25), and a second hole (31) having a fourth axis (C) perpendicular to said first axis (A) and parallel to said third axis (E), and intersecting said first hole (30); said releasable fastening means comprising, for each of said first engaging elements (25), a pin (32), which is inserted inside a respective said second hole (31) in a respective said assembly direction parallel to said fourth axis (C), and in turn comprises an intermediate portion engaging a third hole (34) formed in the respective said first engaging element (25), and opposite axial end portions engaged interferentially in the second hole (31) to rigidly connect the first engaging element (25) to said supporting element (2); said second and third walls (11, 12) each comprising a pair of second openings (37) located on opposite sides of the respective said first hole (30) and for permitting removal of the respective said pin (32) from said supporting element (2).

10. A device as claimed in any one of the foregoing Claims, characterized in that said second hinge connecting means comprise a second pin (56) coaxial with said third axis (E) and fitted to said supporting element (2) in a respective said assembly direction parallel to the third axis (E); said second pin (56) comprising an intermediate portion (57) engaging in sliding manner a fourth hole (58) coaxial with said third axis (E) and formed in said relay lever (55), and opposite axial end portions (59, 60) engaged interferentially in respective fifth holes (61, 62) formed in said supporting element (2).

11. A device as claimed in any one of the foregoing Claims, characterized in that said supporting element (2) comprises a cover (21) for closing said first opening (20) and fitted releasably to respective edges of the first opening (20).

12. A method of assembling a control device (1) for a vehicle transmission, said device (1) comprising:
- a box-shaped supporting element (2) fittable to a vehicle body (3);
- an intermediate element (5);
- first hinge connecting means (25, 32) for connecting said intermediate element (5) to said supporting element (2), and defining a first axis (A) of rotation of said intermediate element (5) with respect to the supporting element (2);
- a gear lever (6) fitted to said intermediate element (5) and rotating with respect to the intermediate element (5) about a second axis (B) perpendicular to said first axis (A);
- a relay lever (55);
- second hinge connecting means (56) for connecting said relay lever (55) to said supporting element (2) about a third axis (E) distinct from said first and second axes (A, B); and
- transmission means (49) interposed between said gear lever (6) and said relay lever (55) to rotate said relay lever (55) about said third axis (E) in response to rotation of said gear lever (6) and said intermediate element (5) about said first axis (A);
said method being characterized by comprising the steps of:
- forming a preassembled unit (80) by assembling to one another at least said intermediate element (5), said gear lever (6), said relay lever (55) and said transmission means (49);
- placing said supporting element (2) in a fixed assembly position;
- inserting said preassembled unit (80) inside said supporting element (2) through an opening (20) in the supporting element (2) and in an insertion direction (F);
- fitting said first and second hinge connecting means (25, 32, 56) to said supporting element (2) in assembly directions crosswise to said insertion direction (F).

13. A method as claimed in Claim 12, wherein said device (1) comprises a first remote control member (45) connected to said gear lever (6) and for transmitting motion to said transmission in response to rotation of said gear lever (6) about said second axis (B); and a second remote control member (67) connected to said relay lever (55) and for transmitting motion to said transmission in response to rotation of said gear lever (6) and said intermediate element (5) about said first axis (A); said method being characterized in that said step of forming said preassembled unit (80) comprises a step of connecting said first and second remote control members (45, 67) respectively to said gear lever (6) and to said relay lever (55).

14. A method as claimed in Claim 13, wherein said first and second remote control members (45, 67) are engaged inside respective through seats (70) formed in a wall (16) of said supporting element (2); said wall (16) comprising a fixed first portion (71) and a movable second portion (73), which cooperate transversely and on opposite sides with said remote control members (45, 67), are connected to each other releasably, and comprise respective pairs of first and second recesses (72, 75) facing each other and defining said seats (70); said method being characterized in that said step of inserting said preassembled unit (80) inside said supporting element (2) comprises a step of engaging said remote control members (45, 67) in said first recesses (72) in said first portion (71) of said wall (16); said method comprising the further step of releasably connecting said second portion (73) of said wall (16) to said first portion (71) of said wall (16) so that said second recesses (75) engage said remote control members (45, 67) on the opposite side to said first recesses (72).

15. A method as claimed in any one of the foregoing Claims from 12 to 14, characterized by comprising a final step of closing said opening (20) in said supporting element (2) by means of a cover (21) fitted to the edges of the opening (20).
